# EUROPEAN PATENT APPLICATION

(11) **EP 4 836 266 A1**
(43) Date of publication of application: **04.11.2026**
(21) Application number: 25202119.1
(22) Date of filing: 15.09.2025
(51) Int. Cl.: H02M 1/32, H02J 50/12, H02M 3/00, H02M 3/335, H02M 1/00

(54) **INDUCTIVE POWER SUPPLY AND OPERATING METHOD THEREOF WITH VARIABLE CAPACITANCE AND RECTIFICATION CONTROL**

(30) Priority: 29.04.2025 CN 202510552086
(71) Applicant: Delta Electronics, Inc., Taoyuan City 33370 (TW)
(72) Inventor: Chan, Chi-Che, Taoyuan City 32063 (TW)
(74) Representative: Uexküll & Stolberg

(57) **Abstract**

An inductive power supply (1) and an operating method thereof are provided. The inductive power supply (1) includes a power transmitting portion (2) and a power receiving portion (3). The power receiving portion (3) includes a power receiving coil (30), receiving-side driving modules (31, 32), a receiving-side controller (4b), and a first receiving-side signal processor (5b). The first receiving-side signal processor (5b) is configured to continuously receive a receiving-side resonant signal (RTa) from the power receiving coil (30). The receiving-side controller (4b) is configured to determine that the power transmitting portion (2) is in the self-resonant state when a resonant frequency of the receiving-side resonant signal (RTa) is lower than a preset frequency. When the power transmitting portion (2) is in the self-resonant state, the receiving-side controller (4b) is configured to obtain a distance between the power transmitting coil (20) and the power receiving coil (30) according to the resonant frequency and adjust a number of receiving-side driving modules (31, 32) to be enabled according to the distance.

## Description

### FIELD OF THE INVENTION

The present disclosure relates to the field of power supply, and more particularly to an inductive power supply and an operating method thereof with variable capacitance and rectification control.

### BACKGROUND OF THE INVENTION

The main architecture of an inductive power supply (e.g., an inductive charger that transmits energy through coil induction) includes a power transmitting portion with a driver. The driver drives the resonant capacitor and coil of the power transmitting portion to perform resonance so that the power transmitting coil transmits electrical energy. Then, a coil of a power receiving portion receives the electrical energy, and the resonant capacitor and coil of the power receiving portion resonate to improve efficiency. Afterwards, a rectifier is utilized to convert the electrical energy into a power specification suitable for use by a load.

Variations in the resonant frequency of the resonant capacitor and the coil may affect the maximum transferable power and efficiency of the inductive power supply. In practice, the inductance of the coil varies with the induction distance between the coils of the power transmitting portion and the power receiving portion, hence different resonant frequencies of the inductive power supply are required to optimize performance. However, in conventional inductive power supplies, the capacitances of the capacitors used for resonance are set to fixed values during production, and cannot be adjusted in response to the variations in the induction distance of the coils. Accordingly, the efficiency of the inductive power supply cannot be maintained at an optimized level.

Therefore, there is a need of providing an inductive power supply and an operating method thereof in order to overcome the drawbacks of the conventional technologies.

### SUMMARY OF THE INVENTION

The present disclosure provides an inductive power supply and an operating method thereof with variable capacitance and rectification control. When the power transmitting portion of the inductive power supply is in a self-resonant state, the resonant frequency in the power receiving portion of the inductive power supply is measured to obtain the distance between the power transmitting coil and the power receiving coil. According to the distance between the power transmitting coil of the power transmitting portion and the power receiving coil of the power receiving portion, the number of enabled receiving-side driving modules is adjusted, so as to change the number of capacitors of the power receiving portion in operation. Thereby, the resonant frequency is adjusted, and the inductive power supply is allowed to achieve high efficiency regardless of the distance between the power transmitting coil and the power receiving coil.

In accordance with an aspect of the present disclosure, an inductive power supply is provided. The inductive power supply includes a power transmitting portion and a power receiving portion. The power transmitting portion is connected to a power source and includes a power transmitting coil, a power-side driving module, and a power-side controller. The power transmitting coil has a first node and a second node at its two ends respectively. The power-side driving module includes a power-side resonant capacitor, a power-side switch circuit and a power-side driver. The power-side switch circuit is connected to the power source and is electrically connected between the power-side resonant capacitor and the power-side driver. The power-side resonant capacitor is further electrically connected to the first node and is configured to resonate with the power transmitting coil. The power-side controller is electrically connected to the power-side driving module, and is configured to provide a power-side driving signal to the power-side driving module. The power-side driver is configured to drive the power-side switch circuit according to the power-side driving signal. The power-side controller is configured to enable or disable the power-side driving module through the power-side driving signal to correspondingly control the power transmitting portion to be in a power transmission state or a self-resonant state. The power receiving portion is configured to receive power inductively from the power transmitting portion and includes a power receiving coil, receiving-side driving modules, a receiving-side controller, and a first receiving-side signal processor. The power receiving coil is electromagnetically coupled to the power transmitting coil, and has a first node and a second node at its two ends respectively. The receiving-side driving modules are electrically connected in parallel to each other. Each receiving-side driving module includes a receiving-side capacitor, a receiving-side switch circuit and a receiving-side driver. The receiving-side switch circuit is connected to an output terminal of the inductive power supply and is electrically connected between the receiving-side capacitor and the receiving-side driver. The receiving-side capacitor is further electrically connected to the first node of the power receiving coil. The receiving-side controller is electrically connected to the receiving-side driving modules, and is configured to provide receiving-side driving signals to the receiving-side driving modules respectively. In each of the receiving-side driving modules, the receiving-side driver is configured to drive the receiving-side switch circuit according to the receiving-side driving signal. The first receiving-side signal processor is electrically connected to the first node of the power receiving coil and the receiving-side controller, and is configured to continuously receive a receiving-side resonant signal from the power receiving coil and provide the receiving-side resonant signal to the receiving-side controller. The receiving-side controller is configured to determine that the power transmitting portion is in the self-resonant state when a resonant frequency of the receiving-side resonant signal is lower than a preset frequency. When the power transmitting portion is in the self-resonant state, the receiving-side controller is configured to obtain a distance between the power transmitting coil and the power receiving coil according to the resonant frequency and adjust a number of receiving-side driving modules to be enabled according to the distance.

In accordance with another aspect of the present disclosure, an operating method of an inductive power supply is provided. The operating method includes steps of: (S1) providing a power transmitting portion and a power receiving portion of the inductive power supply, wherein the power transmitting portion comprises a power transmitting coil, a power-side driving module and a power-side controller, the power-side driving module comprises a power-side resonant capacitor, a power-side switch circuit and a power-side driver, the power receiving portion comprises a power receiving coil, receiving-side driving modules, a receiving-side controller and a first receiving-side signal processor, and each of the receiving-side driving modules comprises a receiving-side capacitor, a receiving-side switch circuit and a receiving-side driver; (S2) providing a power-side driving signal to the power-side driving module by the power-side controller, driving the power-side switch circuit according to the power-side driving signal by the power-side driver, providing receiving-side driving signals to the receiving-side driving modules respectively by the receiving-side controller, and in each of the receiving-side driving modules, driving the receiving-side switch circuit according to the receiving-side driving signal by the receiving-side driver; (S3) enabling or disabling the power-side driving module through the power-side driving signal by the power-side controller to correspondingly control the power transmitting portion to be in a power transmission state or a self-resonant state; (S4) continuously receiving a receiving-side resonant signal from the power receiving coil and providing the receiving-side resonant signal to the receiving-side controller by the first receiving-side signal processor; and (S5) determining that the power transmitting portion is in the self-resonant state by the receiving-side controller when a resonant frequency of the receiving-side resonant signal is lower than a preset frequency, and when the power transmitting portion is in the self-resonant state, obtaining a distance between the power transmitting coil and the power receiving coil according to the resonant frequency and adjusting a number of receiving-side driving modules to be enabled according to the distance by the receiving-side controller.

### BRIEF DESCRIPTION OF THE DRAWINGS

FIG. 1 is a schematic circuit diagram illustrating an inductive power supply according to a first embodiment of the present disclosure;
FIG. 2 is a schematic timing diagram showing the voltage parameters of the power receiving portion of the inductive power supply shown in FIG. 1;
FIG. 3 is a schematic oscillogram showing the operation of the upper and lower switches of the power-side switch circuit in a first implementation when the receiving-side driving module of the power receiving portion of the inductive power supply shown in FIG. 1 is enabled;
FIG. 4 is a schematic oscillogram showing the operation of the upper and lower switches of the power-side switch circuit in a second implementation when the receiving-side driving module of the power receiving portion of the inductive power supply shown in FIG. 1 is enabled;
FIG. 5 is a schematic circuit diagram illustrating an inductive power supply according to a second embodiment of the present disclosure; and
FIG. 6 is a schematic flow chart illustrating an operating method of an inductive power supply according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

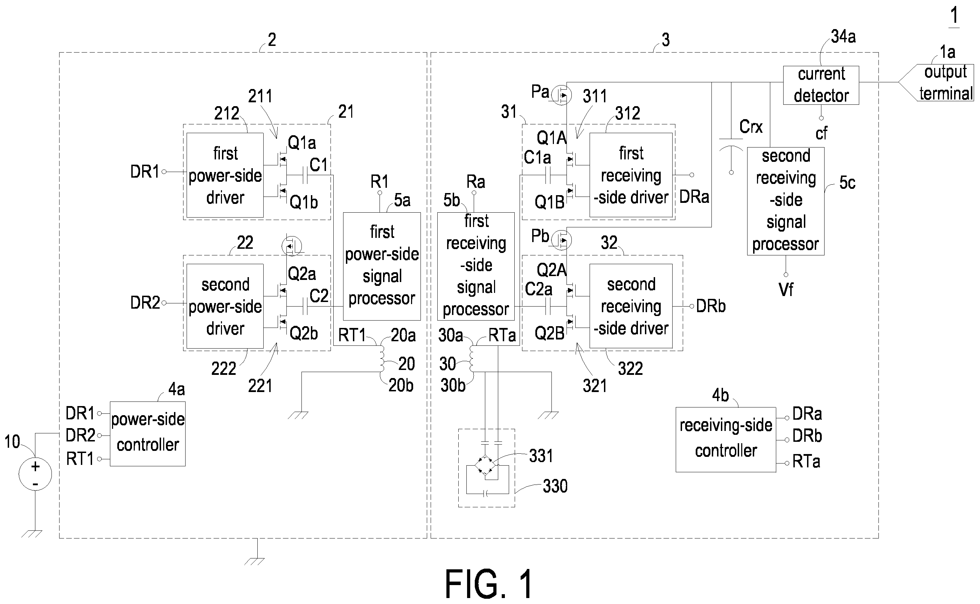

FIG. 1 is a schematic circuit diagram illustrating an inductive power supply according to a first embodiment of the present disclosure. As shown in FIG. 1, the inductive power supply 1 includes a power transmitting portion 2 and a power receiving portion 3. The power transmitting portion 2 is electrically connected to a power source 10 and is configured to transmit power to the power receiving portion 3. The power transmitting portion 2 includes a power transmitting coil 20, at least one power-side driving module, a power-side controller 4a, and a first power-side signal processor 5a. The power transmitting coil 20 has a first node 20a and a second node 20b at its two ends respectively. In an embodiment, the second node 20b is grounded.

The number of power-side driving modules of the power transmitting portion 2 may be one or more. FIG. 1 exemplifies two power-side driving modules, namely a first power-side driving module 21 and a second power-side driving module 22. The first power-side driving module 21 includes a first power-side resonant capacitor C1, a first power-side switch circuit 211, and a first power-side driver 212. The first power-side switch circuit 211 is electrically connected to the power source 10 and is electrically connected between the first power-side resonant capacitor C1 and the first power-side driver 212. The first power-side resonant capacitor C1 is further electrically connected to the first node 20a. The first power-side driver 212 is configured to drive the first power-side switch circuit 211. The first power-side resonant capacitor C1 is in different potential states according to the switching operation of the first power-side switch circuit 211.

The second power-side driving module 22 is electrically connected in parallel to the first power-side driving module 21. The second power-side driving module 22 includes a second power-side resonant capacitor C2, a second power-side switch circuit 221, and a second power-side driver 222. The second power-side switch circuit 221 is electrically connected to the power source 10 and is electrically connected between the second power-side resonant capacitor C2 and the second power-side driver 222. The second power-side resonant capacitor C2 is further electrically connected to the first node 20a. The second power-side driver 222 is configured to drive the second power-side switch circuit 221. The second power-side resonant capacitor C2 is in different potential states according to the switching operation of the second power-side switch circuit 221.

The power-side controller 4a is electrically connected to the first power-side driving module 21 and the second power-side driving module 22 and provides a first power-side driving signal DR1 and a second power-side driving signal DR2 to the first power-side driver 212 of the first power-side driving module 21 and the second power-side driver 222 of the second power-side driving module 22 respectively. The first power-side driver 212 drives the first power-side switch circuit 211 according to the first power-side driving signal DR1. The second power-side driver 222 drives the second power-side switch circuit 221 according to the second power-side driving signal DR2. The first power-side driving signal DR1 and the second power-side driving signal DR2 may be pulse width modulation signals, but not limited thereto. The first power-side signal processor 5a is electrically connected to the first node 20a of the power transmitting coil 20 and the power-side controller 4a. The first power-side signal processor 5a is configured to receive a first power-side resonant signal RT1 from the first node 20a, process the first power-side resonant signal RT1, and provide a first power-side conversion signal R1 to the power-side controller 4a. The first power-side signal processor 5a may adopt suitable signal processor according to actual requirements, and the specific implementation of first power-side signal processor 5a in the present disclosure is not limited. For example, the first power-side signal processor 5a may include an analog-to-digital converter, which converts the first power-side resonant signal RT1 into the first power-side conversion signal R1 with digital form and provides the first power-side conversion signal R1 to the power-side controller 4a.

The power receiving portion 3 includes a power receiving coil 30, a plurality of receiving-side driving modules, a receiving-side controller 4b, and a first receiving-side signal processor 5b. The power receiving coil 30 has a first node 30a and a second node 30b at its two ends respectively, and the power receiving coil 30 is electromagnetically coupled to the power transmitting coil 20. In an embodiment, the second node 30b is grounded.

The plurality of receiving-side driving modules may serve as synchronous rectifier switches, and the number of receiving-side driving modules is two or more. FIG. 1 exemplifies two receiving-side driving modules, namely a first receiving-side driving module 31 and a second receiving-side driving module 32. The first receiving-side driving module 31 includes a first receiving-side capacitor C1a, a first receiving-side switch circuit 311, and a first receiving-side driver 312. The first receiving-side switch circuit 311 is electrically connected to an output terminal 1a of the inductive power supply 1 and is electrically connected between the first receiving-side capacitor C1a and the first receiving-side driver 312. The first receiving-side capacitor C1a is further electrically connected to the first node 30a. The first receiving-side driver 312 is configured to drive the first receiving-side switch circuit 311. The first receiving-side capacitor C1a is in different potential states according to the switching operation of the first receiving-side switch circuit 311.

The second receiving-side driving module 32 is electrically connected in parallel to the first receiving-side driving module 31. The second receiving-side driving module 32 includes a second receiving-side capacitor C2a, a second receiving-side switch circuit 321, and a second receiving-side driver 322. The second receiving-side switch circuit 321 is electrically connected to the output terminal 1a of the inductive power supply 1 and is electrically connected between the second receiving-side capacitor C2a and the second receiving-side driver 322. The second receiving-side capacitor C2a is further electrically connected to the first node 30a. The second receiving-side driver 322 is configured to drive the second receiving-side switch circuit 321. The second receiving-side capacitor C2a is in different potential states according to the switching operation of the second receiving-side switch circuit 321.

The receiving-side controller 4b is electrically connected to the first receiving-side driving module 31 and the second receiving-side driving module 32, and provides a first receiving-side driving signal DRa and a second receiving-side driving signal DRb to the first receiving-side driver 312 of the first receiving-side driving module 31 and the second receiving-side driver 322 of the second receiving-side driving module 32 respectively. The first receiving-side driver 312 drives the first receiving-side switch circuit 311 according to the first receiving-side driving signal DRa. The second receiving-side driver 322 drives the second receiving-side switch circuit 321 according to the second receiving-side driving signal DRb. The first receiving-side driving signal DRa and the second receiving-side driving signal DRb may be pulse width modulation signals, but not limited thereto. The first receiving-side signal processor 5b is electrically connected to the first node 30a of the power receiving coil 30 and the receiving-side controller 4b. The first receiving-side signal processor 5b is configured to continuously receive a receiving-side resonant signal RTa from the first node 30a, process the receiving-side resonant signal RTa, and provide a receiving-side conversion signal Ra to the receiving-side controller 4b. The first receiving-side signal processor 5b may adopt suitable signal processor according to actual requirements, and the specific implementation of the first receiving-side signal processor 5b in the present disclosure is not limited. For example, the first receiving-side signal processor 5b may include an analog-to-digital converter, which converts the receiving-side resonant signal RTa into the receiving-side conversion signal Ra with digital form and provides the receiving-side conversion signal Ra to the receiving-side controller 4b.

In the present disclosure, the power-side controller 4a enables or disables the first power-side driving module 21 and the second power-side driving module 22 through the first power-side driving signal DR1 and the second power-side driving signal DR2 respectively to correspondingly control the power transmitting portion 2 to be in a power transmission state or a self-resonant state. When the power-side controller 4a enables the first power-side driving module 21 and the second power-side driving module 22 through the first power-side driving signal DR1 and the second power-side driving signal DR2 respectively, the power transmitting portion 2 is controlled to be in the power transmission state. Conversely, when the power-side controller 4a disables the first power-side driving module 21 and the second power-side driving module 22 through the first power-side driving signal DR1 and the second power-side driving signal DR2 respectively, the power transmitting portion 2 is controlled to be in the self-resonant state.

In addition, the receiving-side controller 4b detects the receiving-side resonant signal RTa through the receiving-side conversion signal Ra. When the resonant frequency of the receiving-side resonant signal RTa is lower than a preset frequency, the receiving-side controller 4b determines that the power transmitting portion 2 is in the self-resonant state. Moreover, when the receiving-side controller 4b determines that the power transmitting portion 2 is in the self-resonant state, the receiving-side controller 4b further obtains the distance between the power transmitting coil 20 and the power receiving coil 30 according to the resonant frequency of the receiving-side resonant signal RTa, and adjusts the number of receiving-side driving modules to be enabled according to the distance between the power transmitting coil 20 and the power receiving coil 30. That is, the receiving-side controller 4b enables at least one of the first receiving-side driving module 31 and the second receiving-side driving module 32 through the first receiving-side driving signal DRa and the second receiving-side driving signal DRb. For instance, the receiving-side controller 4b may enable the first receiving-side driving module 31 and disable the second receiving-side driving module 32, or the receiving-side controller 4b may enabling both the first receiving-side driving module 31 and the second receiving-side driving module 32. Consequently, the effective capacitance is adjusted to change the resonant frequency of the receiving-side resonant signal RTa. It is noted that the number of receiving-side driving modules to be enabled is negatively correlated with the distance between the power transmitting coil 20 and the power receiving coil 30. Additionally, increasing the effective capacitance can lower the resonant frequency of the receiving-side resonant signal RTa.

From the above, the plurality of receiving-side driving modules of the power receiving portion 3 are electrically connected in parallel to each other, and each receiving-side driving module includes a receiving-side capacitor. For example, the first receiving-side driving module 31 includes the first receiving-side capacitor C1a, and the second receiving-side driving module 32 includes the second receiving-side capacitor C2a. When a receiving-side driving module is enabled, the receiving-side capacitor of the enabled receiving-side driving module resonates with the power receiving coil 30 to generate the receiving-side resonant signal RTa. Therefore, in the inductive power supply 1 of the present disclosure, according to the distance between the power transmitting coil 20 and the power receiving coil 30, the receiving-side controller 4b of power receiving portion 3 enables a corresponding number of receiving-side driving modules to adjust the number of receiving-side capacitors that resonate with the power receiving coil 30, thereby changing the equivalent resonant capacitance and adjusting the resonant frequency of the receiving-side resonant signal RTa. Thereby, the inductive power supply 1 is able to maintain high efficiency regardless of the distance between the power transmitting coil 20 and the power receiving coil 30.

In an embodiment, the receiving-side controller 4b has a preset first frequency and second frequency. The first frequency is the resonant frequency (lower frequency) of the receiving-side resonant signal RTa when the power transmitting coil 20 and the power receiving coil 30 are closest, and the second frequency is the resonant frequency (higher frequency) of the receiving-side resonant signal RTa when the power transmitting coil 20 and the power receiving coil 30 are at the preset maximum induction distance. The receiving-side controller 4b is further configured to calculate the distance between the power transmitting coil 20 and the power receiving coil 30 according to the ratios of the detected resonant frequency of the receiving-side resonant signal RTa to the first and second frequencies.

In an embodiment, the power receiving portion 3 further includes an auxiliary rectifier 330 electrically connected to the first node 30a and the second node 30b of the power receiving coil 30 and the receiving-side controller 4b. The auxiliary rectifier 330 is configured to rectify the electrical energy of the power receiving coil 30 to provide DC power required for the operation of the receiving-side controller 4b. The auxiliary rectifier 330 includes a diode bridge rectifier circuit 331. The diode bridge rectifier circuit 331 operates continuously. When the diode bridge rectifier circuit 331 receives power from the power receiving coil 30, the diode bridge rectifier circuit 331 rectifies the power into DC power for use by the receiving-side controller 4b immediately. The auxiliary rectifier 330 has the characteristics of fast response and low output power demand.

The circuit structures of the first power-side switch circuit 211, the second power-side switch circuit 221, the first receiving-side switch circuit 311, and the second receiving-side switch circuit 321 are described in detail as follows.

Please refer to FIG. 1 again. The first power-side switch circuit 211 includes a first upper switch Q1a and a first lower switch Q1b electrically connected in series. The first upper switch Q1a and the first lower switch Q1b are for example but not limited to N-channel enhancement mode MOSFETs (metal-oxide-semiconductor field-effect transistors). The gate and drain of the first upper switch Q1a are electrically connected to the first power-side driver 212 and the power source 10 respectively. The source of the first upper switch Q1a is electrically connected to the drain of the first lower switch Q1b. The gate of the first lower switch Q1b is electrically connected to the first power-side driver 212. The source of the first lower switch Q1b is grounded. A first terminal of the first power-side resonant capacitor C1 is electrically connected to the source of the first upper switch Q1a and the drain of the first lower switch Q1b, and a second terminal of the first power-side resonant capacitor C1 is electrically connected to the first node 20a.

The second power-side switch circuit 221 includes a second upper switch Q2a and a second lower switch Q2b electrically connected in series. The second upper switch Q2a and the second lower switch Q2b are for example but not limited to N-channel enhancement mode MOSFETs. The gate and drain of the second upper switch Q2a are electrically connected to the second power-side driver 222 and the power source 10 respectively. The source of the second upper switch Q2a is electrically connected to the drain of the second lower switch Q2b. The gate of the second lower switch Q2b is electrically connected to the second power-side driver 222. The source of the second lower switch Q2b is grounded. A first terminal of the second power-side resonant capacitor C2 is electrically connected to the source of the second upper switch Q2a and the drain of the second lower switch Q2b, and a second terminal of the second power-side resonant capacitor C2 is electrically connected to the first node 20a.

The first receiving-side switch circuit 311 includes a first upper switch Q1A and a first lower switch Q1B electrically connected in series. The first upper switch Q1A and the first lower switch Q1B are for example but not limited to N-channel enhancement mode MOSFETs. The gate and drain of the first upper switch Q1A are electrically connected to the first receiving-side driver 312 and the output terminal 1a of the inductive power supply 1 respectively. The source of the first upper switch Q1A is electrically connected to the drain of the first lower switch Q1B. The gate of the first lower switch Q1B is electrically connected to the first receiving-side driver 312. The source of the first lower switch Q1B is grounded. A first terminal of the first receiving-side capacitor C1a is electrically connected to the source of the first upper switch Q1A and the drain of the first lower switch Q1B, and a second terminal of the first receiving-side capacitor C1a is electrically connected to the first node 30a.

The second receiving-side switch circuit 321 includes a second upper switch Q2A and a second lower switch Q2B electrically connected in series. The second upper switch Q2A and the second lower switch Q2B are for example but not limited to N-channel enhancement mode MOSFETs. The gate and drain of the second upper switch Q2A are electrically connected to the second receiving-side driver 322 and the output terminal 1a of the inductive power supply 1 respectively. The source of the second upper switch Q2A is electrically connected to the drain of the second lower switch Q2B. The gate of the second lower switch Q2B is electrically connected to the second receiving-side driver 322. The source of the second lower switch Q2B is grounded. A first terminal of the second receiving-side capacitor C2a is electrically connected to the source of the second upper switch Q2A and the drain of the second lower switch Q2B, and a second terminal of the second receiving-side capacitor C2a is electrically connected to the first node 30a.

In an embodiment, disabling the first power-side driving module 21 by the power-side controller 4a means fixing the first power-side driving signal DR1 at a high or low voltage level or turning off the first upper switch Q1A and the first lower switch Q1B of the first power-side driving module 21 by the first power-side driving signal DR1. Similarly, disabling the second power-side driving module 22 by the power-side controller 4a means fixing the second power-side driving signal DR2 at a high or low voltage level or turning off the second upper switch Q2A and the second lower switch Q2B of the second power-side driving module 22 by the second power-side driving signal DR2.

In an embodiment, to prevent damage to the first receiving-side switch circuit 311 and the second receiving-side switch circuit 321 caused by abnormal voltage at the output terminal 1a of the inductive power supply 1, the power receiving portion 3 further includes a first blocking switch Pa and a second blocking switch Pb. The first blocking switch Pa is electrically connected between the first upper switch Q1A and the output terminal 1a of the inductive power supply 1, and is controlled by the receiving-side controller 4b. The first blocking switch Pa can be turned off by the receiving-side controller 4b when abnormal voltage occurs at the output terminal 1a of the inductive power supply 1. The second blocking switch Pb is electrically connected between the second upper switch Q2A and the output terminal 1a of the inductive power supply 1, and is controlled by the receiving-side controller 4b. The second blocking switch Pb can be turned off by the receiving-side controller 4b when abnormal voltage occurs at the output terminal 1a of the inductive power supply 1. In the embodiment shown in FIG. 1, the first blocking switch Pa and the second blocking switch Pb are P-channel MOSFETs.

In an embodiment, after the receiving-side controller 4b receives the DC power provided by the auxiliary rectifier 330, the initial states of the first receiving-side driving module 31 and the second receiving-side driving module 32 are disabled, and the initial states of the first blocking switch Pa and the second blocking switch Pb are off.

In an embodiment, the power receiving portion 3 further includes an output capacitor Crx electrically connected between the output terminal 1a of the inductive power supply 1 and a ground terminal. Additionally, the power receiving portion 3 further includes a current detector 34a electrically connected between the receiving-side driving modules (i.e., the first receiving-side driving module 31 and the second receiving-side driving module 32) and the output terminal 1a of the inductive power supply 1. The current detector 34a is configured to detect the current at the output terminal 1a and correspondingly generate a current detection signal Cf to the receiving-side controller 4b. The receiving-side controller 4b controls the operation of the first receiving-side driving module 31 and the second receiving-side driving module 32 according to the current detection signal Cf to adjust the magnitude of the current at the output terminal 1a of the inductive power supply 1. Furthermore, the power receiving portion 3 further includes a second receiving-side signal processor 5c electrically connected to the output capacitor Crx and the receiving-side controller 4b. The second receiving-side signal processor 5c is configured to process the voltage across the output capacitor Crx into a voltage detection signal Vf and provide the voltage detection signal Vf to the receiving-side controller 4b. The receiving-side controller 4b controls the operation of the first receiving-side driving module 31 and the second receiving-side driving module 32 according to the voltage detection signal Vf to adjust the magnitude of the voltage at the output terminal 1a of the inductive power supply 1. The second receiving-side signal processor 5c may adopt suitable signal processor according to actual requirements, and the specific implementation of the second receiving-side signal processor 5c is not limited in the present disclosure. For example, the second receiving-side signal processor 5c may include an analog-to-digital converter, which converts the current detection signal into a digital signal and provides the digital signal to the receiving-side controller 4b.

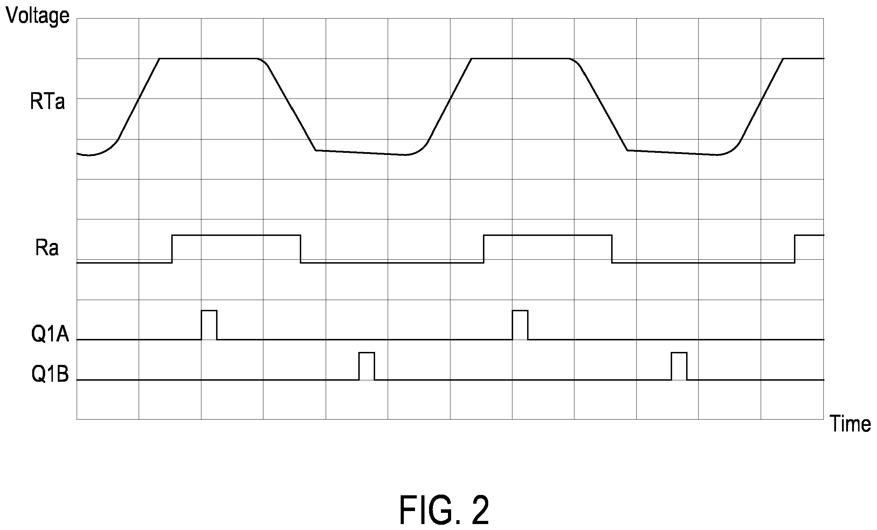

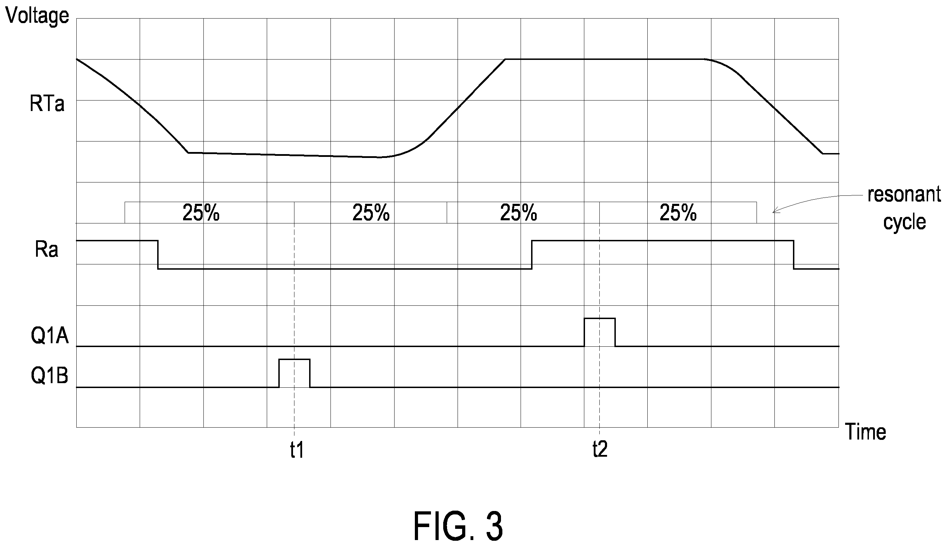

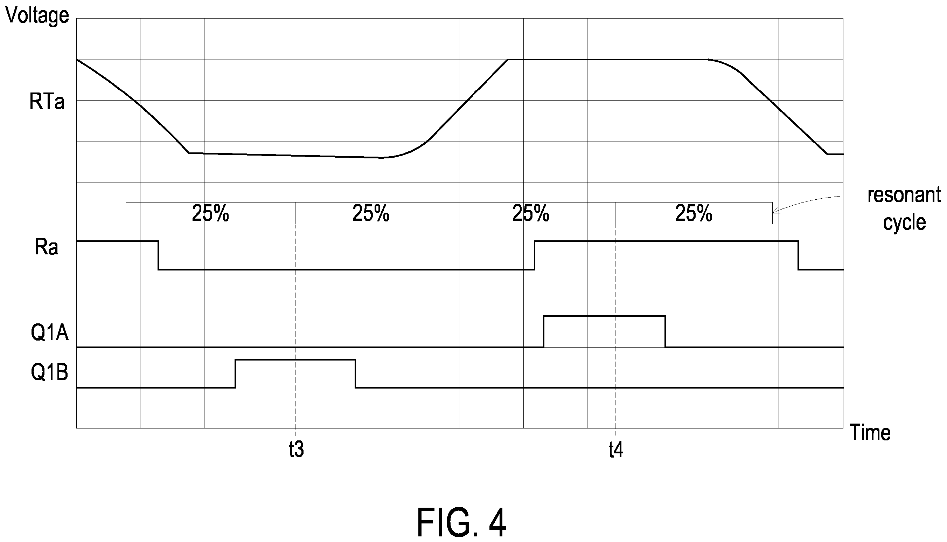

Please refer to FIG. 2, FIG. 3 and FIG. 4 in conjunction with FIG. 1. FIG. 2 is a schematic timing diagram showing the voltage parameters of the power receiving portion of the inductive power supply shown in FIG. 1. FIG. 3 is a schematic oscillogram showing the operation of the upper and lower switches of the power-side switch circuit in a first implementation when the receiving-side driving module of the power receiving portion of the inductive power supply shown in FIG. 1 is enabled. FIG. 4 is a schematic oscillogram showing the operation of the upper and lower switches of the power-side switch circuit in a second implementation when the receiving-side driving module of the power receiving portion of the inductive power supply shown in FIG. 1 is enabled. Since the first receiving-side signal processor 5b is configured to acquire the receiving-side resonant signal RTa from the first node 30a of the power receiving coil 30, the receiving-side conversion signal Ra forms a falling edge when the receiving-side resonant signal RTa at the first node 30a transits from positive to negative. Additionally, in an embodiment, the receiving-side controller 4b sets the time between two consecutive falling edges of the receiving-side conversion signal Ra as a resonant cycle. In another embodiment, the receiving-side conversion signal Ra may form a rising edge when the receiving-side resonant signal RTa at the first node 30a transits from negative to positive, and the receiving-side controller 4b may set the time between two consecutive rising edges of the receiving-side conversion signal Ra as the resonant cycle. In other words, the receiving-side controller 4b sets a time between two consecutive positive-to-negative or negative-to-positive voltage transitions of the receiving-side resonant signal RTa as the resonant cycle. When the resonant cycle falls within a preset resonant cycle range, the receiving-side controller 4b calculates a first time point at 1/4 of the resonant cycle (e.g., time t1 in FIG. 3 or time t3 in FIG. 4) and a second time point at 3/4 of the resonant cycle (e.g., time t2 in FIG. 3 or time t4 in FIG. 4). The receiving-side controller 4b is further configured to control the duty cycle of the upper and lower switches of each receiving-side driving module according to the output requirement of the inductive power supply 1. In specific, regarding each receiving-side driving module, the receiving-side controller 4b controls one of the upper and lower switches to turn on with its conduction time centered at the first time point, and controls the other one of the upper and lower switches to turn on with its conduction time centered at the second time point. Through this control manner of the receiving-side controller 4b, the upper and lower switches of each receiving-side driving module can be prevented from being in the on state at the moment that the voltage of the power receiving coil 30 switches polarity, thereby avoiding failures of the upper and lower switches of the receiving-side driving module. From the above, in the present disclosure, the rectification control is implemented on the receiving-side driving modules to prevent failures of their upper and lower switches.

In the first implementation shown in FIG. 3, the receiving-side controller 4b controls the upper switch of each receiving-side driving module to turn on before and after the first time point at 1/4 of the resonant cycle with a duty cycle of 5%, and controls the lower switch of each receiving-side driving module to turn on before and after the second time point at 3/4 of the resonant cycle with a duty cycle of 5%. In the second implementation shown in FIG. 4, the receiving-side controller 4b controls the upper switch of each receiving-side driving module to turn on before and after the first time point at 1/4 of the resonant cycle with a duty cycle of 20%, and controls the lower switch of each receiving-side driving module to turn on before and after the second time point at 3/4 of the resonant cycle with a duty cycle of 20%.

In the above embodiments, both the power transmitting portion 2 and the power receiving portion 3 of the inductive power supply 1 adopt a half-bridge configuration. However, the present disclosure is not limited thereto. For instance, the power transmitting portion and the power receiving portion of the inductive power supply may adopt a full-bridge configuration, which would be described in detail as follows.

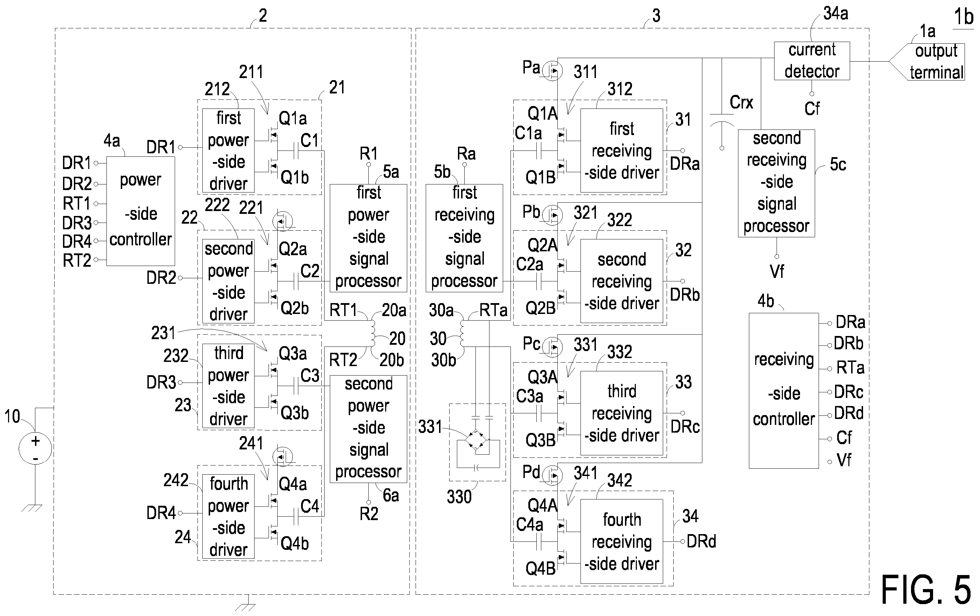

Please refer to FIG. 5. FIG. 5 is a schematic circuit diagram illustrating an inductive power supply according to a second embodiment of the present disclosure. In FIG. 5, the component parts and elements corresponding to those of FIG. 1 are designated by identical numeral references, and detailed descriptions thereof are omitted herein. In this embodiment, the power transmitting portion 2 of the inductive power supply 1b further includes a third power-side driving module 23, a fourth power-side driving module 24, and a second power-side signal processor 6a. The third power-side driving module 23 includes a third power-side resonant capacitor C3, a third power-side switch circuit 231, and a third power-side driver 232. The third power-side switch circuit 231 is electrically connected to the power source 10 and is electrically connected between the third power-side resonant capacitor C3 and the third power-side driver 232. The third power-side resonant capacitor C3 is further electrically connected to the second node 20b. The third power-side driver 232 is configured to drive the third power-side switch circuit 231. The third power-side resonant capacitor C3 is in different potential states according to the switching operation of the third power-side switch circuit 231.

The fourth power-side driving module 24 is electrically connected in parallel to the third power-side driving module 23 and includes a fourth power-side resonant capacitor C4, a fourth power-side switch circuit 241, and a fourth power-side driver 242. The fourth power-side switch circuit 241 is electrically connected to the power source 10 and is electrically connected between the fourth power-side resonant capacitor C4 and the fourth power-side driver 242. The fourth power-side resonant capacitor C4 is further electrically connected to the second node 20b. The fourth power-side driver 242 is configured to drive the fourth power-side switch circuit 241. The fourth power-side resonant capacitor C4 is in different potential states according to the switching operation of the fourth power-side switch circuit 241.

The power-side controller 4a is further electrically connected to the third power-side driving module 23 and the fourth power-side driving module 24, and provides a third power-side driving signal DR3 and a fourth power-side driving signal DR4 to the third power-side driver 232 of the third power-side driving module 23 and the fourth power-side driver 242 of the fourth power-side driving module 24 respectively. The third power-side driver 232 drives the third power-side switch circuit 231 according to the third power-side driving signal DR3. The fourth power-side driver 242 drives the fourth power-side switch circuit 241 according to the fourth power-side driving signal DR4. The third power-side driving signal DR3 and the fourth power-side driving signal DR4 may be pulse width modulation signals, but not limited thereto. The second power-side signal processor 6a is electrically connected to the second node 20b of the power transmitting coil 20 and the power-side controller 4a. The second power-side signal processor 6a is configured to continuously receive the second power-side resonant signal RT2 from the second node 20b, process the second power-side resonant signal RT2, and provide a second power-side conversion signal R2 to the power-side controller 4a. The second power-side signal processor 6a may adopt suitable signal processor according to actual requirements, and the specific implementation of the second power-side signal processor 6a is not limited in the present disclosure. For example, the second power-side signal processor 6a may include an analog-to-digital converter, which converts the second power-side resonant signal RT2 into the second power-side conversion signal R2 with digital form and provides the second power-side conversion signal R2 to the power-side controller 4a.

The circuit structures of the third power-side switch circuit 231 and the fourth power-side switch circuit 241 are described in detail as follows.

Please refer to FIG. 5. The third power-side switch circuit 231 includes a third upper switch Q3a and a third lower switch Q3b electrically connected in series. The third upper switch Q3a and the third lower switch Q3b are for example but not limited to N-channel enhancement mode MOSFETs. The gate and drain of the third upper switch Q3a are electrically connected to the third power-side driver 232 and the power source 10 respectively. The source of the third upper switch Q3a is electrically connected to the drain of the third lower switch Q3b. The gate of the third lower switch Q3b is electrically connected to the third power-side driver 232. The source of the third lower switch Q3b is grounded. A first terminal of the third power-side resonant capacitor C3 is electrically connected to the source of the third upper switch Q3a and the drain of the third lower switch Q3b, and a second terminal of the third power-side resonant capacitor C3 is electrically connected to the second node 20b.

The fourth power-side switch circuit 241 includes a fourth upper switch Q4a and a fourth lower switch Q4b electrically connected in series. The fourth upper switch Q4a and the fourth lower switch Q4b are for example but not limited to N-channel enhancement mode MOSFETs. The gate and drain of the fourth upper switch Q4a are electrically connected to the fourth power-side driver 242 and the power source 10 respectively. The source of the fourth upper switch Q4a is electrically connected to the drain of the fourth lower switch Q4b. The gate of the fourth lower switch Q4b is electrically connected to the fourth power-side driver 242. The source of the fourth lower switch Q4b is grounded. A first terminal of the fourth power-side resonant capacitor C4 is electrically connected to the source of the fourth upper switch Q4a and the drain of the fourth lower switch Q4b, and a second terminal of the fourth power-side resonant capacitor C4 is electrically connected to the second node 20b.

The power receiving portion 3 of the inductive power supply 1b further includes a third receiving-side driving module 33 and a fourth receiving-side driving module 34. The third receiving-side driving module 33 includes a third receiving-side capacitor C3a, a third receiving-side switch circuit 331, and a third receiving-side driver 332. The third receiving-side switch circuit 331 is electrically connected to the output terminal 1a of the inductive power supply 1b and is electrically connected between the third receiving-side capacitor C3a and the third receiving-side driver 332. The third receiving-side capacitor C3a is further electrically connected to the first node 30a. The third receiving-side driver 332 is configured to drive the third receiving-side switch circuit 331. The third receiving-side capacitor C3a is in different potential states according to the switching operation of the third receiving-side switch circuit 331.

The fourth receiving-side driving module 34 is electrically connected in parallel to the third receiving-side driving module 33 and includes a fourth receiving-side capacitor C4a, a fourth receiving-side switch circuit 341, and a fourth receiving-side driver 342. The fourth receiving-side switch circuit 341 is electrically connected to the output terminal 1a of the inductive power supply 1b and is electrically connected between the fourth receiving-side capacitor C4a and the fourth receiving-side driver 342. The fourth receiving-side capacitor C4a is further electrically connected to the first node 30a. The fourth receiving-side driver 342 is configured to drive the fourth receiving-side switch circuit 341. The fourth receiving-side capacitor C4a is in different potential states according to the switching operation of the fourth receiving-side switch circuit 341.

The receiving-side controller 4b is further electrically connected to the third receiving-side driving module 33 and the fourth receiving-side driving module 34, and provides a third receiving-side driving signal DRc and a fourth receiving-side driving signal DRd to the third receiving-side driver 332 of the third receiving-side driving module 33 and the fourth receiving-side driver 342 of the fourth receiving-side driving module 34 respectively. The third receiving-side driver 332 drives the third receiving-side switch circuit 331 according to the third receiving-side driving signal DRc. The fourth receiving-side driver 342 drives the fourth receiving-side switch circuit 341 according to the fourth receiving-side driving signal DRd. The third receiving-side driving signal DRc and the fourth receiving-side driving signal DRd may be pulse width modulation signals, but not limited thereto.

The circuit structures of the third receiving-side switch circuit 331 and the fourth receiving-side switch circuit 341 are described in detail as follows.

Please refer to FIG. 5. The third receiving-side switch circuit 331 includes a third upper switch Q3A and a third lower switch Q3B electrically connected in series. The third upper switch Q3A and the third lower switch Q3B are for example but not limited to N-channel enhancement mode MOSFETs. The gate and drain of the third upper switch Q3A are electrically connected to the third power-side driver 332 and the output terminal 1a of the inductive power supply 1b respectively. The source of the third upper switch Q3A is electrically connected to the drain of the third lower switch Q3B. The gate of the third lower switch Q3B is electrically connected to the third receiving-side driver 332. The source of the third lower switch Q3B is grounded. A first terminal of the third power-side resonant capacitor C3a is electrically connected to the source of the third upper switch Q3A and the drain of the third lower switch Q3B, and a second terminal of the third power-side resonant capacitor C3a is electrically connected to the first node 30a.

The fourth receiving-side switch circuit 341 includes a fourth upper switch Q4A and a fourth lower switch Q4B electrically connected in series. The fourth upper switch Q4A and the fourth lower switch Q4B are for example but not limited to N-channel enhancement mode MOSFETs. The gate and drain of the fourth upper switch Q4A are electrically connected to the fourth receiving-side driver 342 and the output terminal 1a of the inductive power supply 1b respectively. The source of the fourth upper switch Q4A is electrically connected to the drain of the fourth lower switch Q4B. The gate of the fourth lower switch Q4B is electrically connected to the fourth receiving-side driver 342. The source of the fourth lower switch Q4B is grounded. A first terminal of the fourth receiving-side capacitor C4a is electrically connected to the source of the fourth upper switch Q4A and the drain of the fourth lower switch Q4B, and a second terminal of the fourth receiving-side capacitor C4a is electrically connected to the first node 30a.

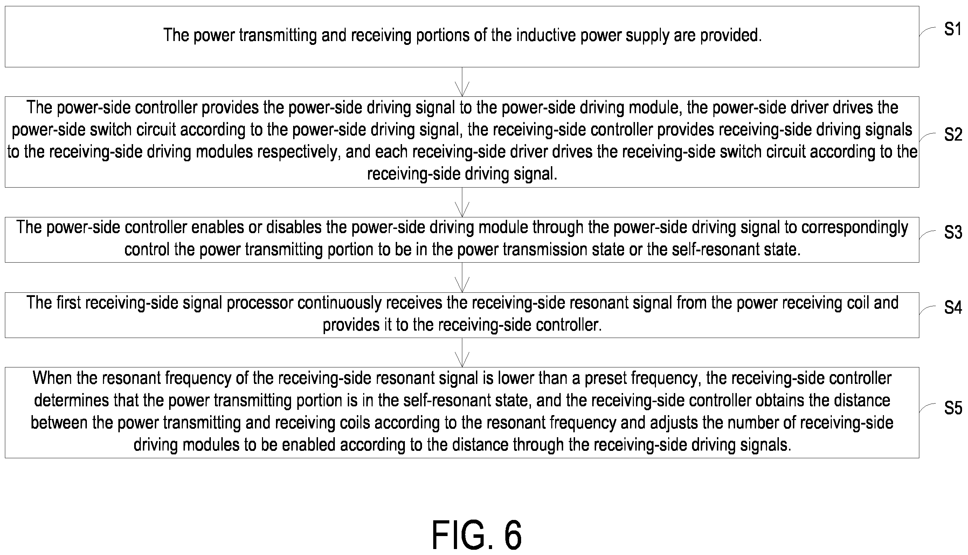

FIG. 6 is a schematic flow chart illustrating an operating method of an inductive power supply according to an embodiment of the present disclosure. The operating method in this embodiment is applicable to the inductive power supply 1 shown in FIG. 1 and the inductive power supply 1b shown in FIG. 5. Please refer to FIG. 6 in conjunction with FIG. 1. The operating method in this embodiment includes the following steps.

In step S1, the power transmitting portion 2 and the power receiving portion 3 of the inductive power supply 1 are provided. The power transmitting portion 2 is connected to the power source 10 and includes the power transmitting coil 20, the power-side driving modules (e.g., the first power-side driving module 21 and the second power-side driving module 22 shown in FIG. 1, or the first power-side driving module 21, the second power-side driving module 22, the third power-side driving module 23 and the fourth power-side driving module 24 shown in FIG. 5), and the power-side controller 4a. The power transmitting coil 20 has the first node 20a and the second node 20b at its two ends respectively. The power-side driving module includes the power-side resonant capacitor, the power-side switch circuit, and the power-side driver. The power-side switch circuit is electrically connected between the power source 10, the power-side resonant capacitor, and the power-side driver. The power-side resonant capacitor is further electrically connected to the first node 20a. The power-side controller 4a is electrically connected to the power-side driving modules. The power receiving portion 3 is configured to receive power inductively from the power transmitting portion 2, and includes the power receiving coil 30, the plurality of receiving-side driving modules (e.g., the first receiving-side driving module 31 and the second receiving-side driving module 32 shown in FIG. 1, or the first receiving-side driving module 31, the second receiving-side driving module 32, the third receiving-side driving module 33 and the fourth receiving-side driving module 34 shown in FIG. 5), the receiving-side controller 4b, and the first receiving-side signal processor 5b. The power receiving coil 30 is electromagnetically coupled to the power transmitting coil 20, and has the first node 30a and the second node 30b at its two ends respectively. The receiving-side driving module includes the receiving-side capacitor, the receiving-side switch circuit, and the receiving-side driver. The receiving-side switch circuit is electrically connected to the output terminal 1a of the inductive power supply 1 and is electrically connected between the receiving-side capacitor and the receiving-side driver. The receiving-side capacitor is further electrically connected to the first node 30a. The receiving-side controller 4b is electrically connected to the plurality of receiving-side driving modules. The first receiving-side signal processor 5b is electrically connected to the first node 30a and the receiving-side controller 4b.

In the step S2, the power-side controller 4a provides the power-side driving signal to the power-side driving module, the power-side driver drives the power-side switch circuit according to the power-side driving signal, the receiving-side controller provides receiving-side driving signals to the receiving-side driving modules respectively, and each receiving-side driver drives the receiving-side switch circuit according to the receiving-side driving signal.

In step S3, the power-side controller 4a enables or disables the power-side driving module through the power-side driving signal to correspondingly control the power transmitting portion 2 to be in the power transmission state or the self-resonant state.

In step S4, the first receiving-side signal processor 5b continuously receives the receiving-side resonant signal RTa from the power receiving coil 30, converts the signal, and provides the converted signal to the receiving-side controller 4b.

In step S5, when the resonant frequency of the receiving-side resonant signal RTa is lower than a preset frequency, the receiving-side controller 4b determines that the power transmitting portion 2 is in the self-resonant state; and when the power transmitting portion 2 is in the self-resonant state, the receiving-side controller 4b obtains the distance between the power transmitting coil 20 and the power receiving coil 30 according to the resonant frequency, and adjusts the number of receiving-side driving modules to be enabled through the receiving-side driving signals according to the distance between the power transmitting coil 20 and the power receiving coil 30.

In an embodiment, the step S2 further includes the steps below. If the receiving-side conversion signal Ra forms a falling edge when the receiving-side resonant signal RTa transits from positive to negative, the receiving-side controller 4b sets the time between two consecutive falling edges of the receiving-side conversion signal Ra as the resonant cycle. Alternatively, if the receiving-side conversion signal Ra forms a rising edge when the receiving-side resonant signal RTa transits from negative to positive, the receiving-side controller 4b sets the time between two consecutive rising edges of the receiving-side conversion signal Ra as the resonant cycle. In other words, the receiving-side controller 4b sets a time between two consecutive positive-to-negative or negative-to-positive voltage transitions of the receiving-side resonant signal RTa as the resonant cycle. When the resonant cycle falls within a preset resonant cycle range, the receiving-side controller 4b calculates the first time point at 1/4 of the resonant cycle and the second time point at 3/4 of the resonant cycle. The receiving-side controller 4b further controls the duty cycle of the upper and lower switches of each receiving-side driving module according to the output requirements of the inductive power supply 1. Regarding each receiving-side driving module, the receiving-side controller 4b controls one of the upper and lower switches to turn on with its conduction time centered at the first time point, and controls the other one of the upper and lower switches to turn on with its conduction time centered at the second time point.

In summary, the present disclosure provides an inductive power supply and an operating method thereof with variable capacitance and rectification control. When the power transmitting portion of the inductive power supply is in a self-resonant state, the resonant frequency in the power receiving portion of the inductive power supply is measured to obtain the distance between the power transmitting coil and the power receiving coil. According to the distance between the power transmitting coil of the power transmitting portion and the power receiving coil of the power receiving portion, the number of capacitors of the power receiving portion in operation is adjusted. Thereby, the resonant frequency is adjusted, and the inductive power supply is allowed to achieve high efficiency regardless of the distance between the power transmitting coil and the power receiving coil.

## Claims

1. An inductive power supply (1), **characterized by** comprising:
a power transmitting portion (2), connected to a power source (10), and comprising:
a power transmitting coil (20), having a first node (20a) and a second node (20b) at two ends of the power transmitting coil (20) respectively;
a power-side driving module (21), comprising a power-side resonant capacitor (C1), a power-side switch circuit (211) and a power-side driver (212), wherein the power-side switch circuit (211) is connected to the power source (10) and is electrically connected between the power-side resonant capacitor (C1) and the power-side driver (212), and the power-side resonant capacitor (C1) is further electrically connected to the first node (20a) and is configured to resonate with the power transmitting coil (20); and
a power-side controller (4a), electrically connected to the power-side driving module (21), and configured to provide a power-side driving signal (DR1) to the power-side driving module (21), wherein the power-side driver (212) is configured to drive the power-side switch circuit (211) according to the power-side driving signal (DR1), and the power-side controller (4a) is configured to enable or disable the power-side driving module (21) through the power-side driving signal (DR1) to correspondingly control the power transmitting portion (2) to be in a power transmission state or a self-resonant state; and
a power receiving portion (3), configured to receive power inductively from the power transmitting portion (2), and comprising:
a power receiving coil (30), electromagnetically coupled to the power transmitting coil (20), and having a first node (30a) and a second node (30b) at two ends of the power receiving coil (30) respectively;
receiving-side driving modules (31, 32), electrically connected in parallel to each other, wherein each of the receiving-side driving modules (31) comprises a receiving-side capacitor (C1a), a receiving-side switch circuit (311) and a receiving-side driver (312), the receiving-side switch circuit (311) is connected to an output terminal (1a) of the inductive power supply (1) and is electrically connected between the receiving-side capacitor (C1a) and the receiving-side driver (312), and the receiving-side capacitor (C1a) is further electrically connected to the first node (30a) of the power receiving coil (30);
a receiving-side controller (4b), electrically connected to the receiving-side driving modules (31, 32), and configured to provide receiving-side driving signals (DRa, DRb) to the receiving-side driving modules (31, 32) respectively, wherein in each of the receiving-side driving modules (31), the receiving-side driver (312) is configured to drive the receiving-side switch circuit (311) according to the receiving-side driving signal (DRa); and
a first receiving-side signal processor (5b), electrically connected to the first node (30a) of the power receiving coil (30) and the receiving-side controller (4b), and configured to continuously receive a receiving-side resonant signal (RTa) from the power receiving coil (30) and provide the receiving-side resonant signal (RTa) to the receiving-side controller (4b),
wherein the receiving-side controller (4b) is configured to determine that the power transmitting portion (2) is in the self-resonant state when a resonant frequency of the receiving-side resonant signal (RTa) is lower than a preset frequency, and when the power transmitting portion (2) is in the self-resonant state, the receiving-side controller (4b) is configured to obtain a distance between the power transmitting coil (20) and the power receiving coil (30) according to the resonant frequency and adjust a number of receiving-side driving modules (31, 32) to be enabled according to the distance.

2. The inductive power supply (1) according to claim 1, wherein the receiving-side controller (4b) is configured to preset a first frequency and a second frequency, the first frequency is the resonant frequency of the receiving-side resonant signal (RTa) when the power transmitting coil (20) and the power receiving coil (30) are at a minimum distance, the second frequency is the resonant frequency of the receiving-side resonant signal (RTa) when the power transmitting coil (20) and the power receiving coil (30) are at a preset maximum induction distance, and the receiving-side controller (4b) is configured to calculate the distance between the power transmitting coil (20) and the power receiving coil (30) according to ratios of the resonant frequency of the receiving-side resonant signal (RTa) to the first and second frequencies.

3. The inductive power supply (1) according to claim 1, wherein the power receiving portion (3) further comprises an auxiliary rectifier (330) electrically connected to the power receiving coil (30) and the receiving-side controller (4b), and the auxiliary rectifier (330) is configured to rectify power from the power receiving coil (30) to provide a DC power required for operation of the receiving-side controller (4b).

4. The inductive power supply (1) according to claim 3, wherein the power receiving portion (3) further comprises blocking switches (Pa, Pb), each of the blocking switches (Pa) is electrically connected between a corresponding receiving-side switch circuit (311) and the output terminal (1a) of the inductive power supply (1) and is controlled by the receiving-side controller (4b), and the blocking switches (Pa, Pb) are turned off by the receiving-side controller (4b) when an abnormal voltage occurs at the output terminal (1a) of the inductive power supply (1).

5. The inductive power supply (1) according to claim 4, wherein after the receiving-side controller (4b) receives the DC power provided by the auxiliary rectifier (330), an initial state of each of the receiving-side driving modules (31, 32) is disabled, and an initial state of each of the blocking switches (Pa, Pb) is off.

6. The inductive power supply (1) according to claim 1, wherein the receiving-side controller (4b) is configured to set a time between two consecutive positive-to-negative or negative-to-positive voltage transitions of the receiving-side resonant signal (RTa) as a resonant cycle and to calculate a first time point at 1/4 of the resonant cycle and a second time point at 3/4 of the resonant cycle when the resonant cycle falls within a preset resonant cycle range, the receiving-side controller (4b) is configured to control a duty cycle of an upper switch (Q1A) and a lower switch (Q1B) of each of the receiving-side driving modules (31) according to output demand of the inductive power supply (1), and the receiving-side controller (4b) is configured to control one of the upper and lower switches (Q1A, Q1B) of each of the receiving-side driving modules (31) to turn on with a conduction time centered at the first time point, and to control the other one of the upper and lower switches (Q1A, Q1B) of each of the receiving-side driving modules (31) to turn on with a conduction time centered at the second time point.

7. The inductive power supply (1, 1b) according to claim 1, wherein the number of the receiving-side driving modules (31, 32) is two and the receiving-side driving modules (31, 32) form a half-bridge configuration, or the number of the receiving-side driving modules (31, 32, 33, 34) is four and the receiving-side driving modules (31, 32, 33, 34) form a full-bridge configuration.

8. An operating method of an inductive power supply (1), **characterized by** comprising steps of:
(S1) providing a power transmitting portion (2) and a power receiving portion (3) of the inductive power supply (1), wherein the power transmitting portion (2) comprises a power transmitting coil (20), a power-side driving module (21) and a power-side controller (4a), the power-side driving module comprises (21) a power-side resonant capacitor (C1), a power-side switch circuit (211) and a power-side driver (212), the power receiving portion (3) comprises a power receiving coil (30), receiving-side driving modules (31, 32), a receiving-side controller (4b) and a first receiving-side signal processor (5b), and each of the receiving-side driving modules (31) comprises a receiving-side capacitor (C1a), a receiving-side switch circuit (311) and a receiving-side driver (312);
(S2) providing a power-side driving signal (DR1) to the power-side driving module (21) by the power-side controller (4a), driving the power-side switch circuit (211) according to the power-side driving signal (DR1) by the power-side driver (212), providing receiving-side driving signals (DRa, DRb) to the receiving-side driving modules (31, 32) respectively by the receiving-side controller (4b), and in each of the receiving-side driving modules (31), driving the receiving-side switch circuit (311) according to the receiving-side driving signal (DRa) by the receiving-side driver (312);
(S3) enabling or disabling the power-side driving module (21) through the power-side driving signal (DR1) by the power-side controller (4a) to correspondingly control the power transmitting portion (2) to be in a power transmission state or a self-resonant state;
(S4) continuously receiving a receiving-side resonant signal (RTa) from the power receiving coil (30) and providing the receiving-side resonant signal (RTa) to the receiving-side controller (4b) by the first receiving-side signal processor (5b); and
(S5) determining that the power transmitting portion (2) is in the self-resonant state by the receiving-side controller (4b) when a resonant frequency of the receiving-side resonant signal (RTa) is lower than a preset frequency, and when the power transmitting portion (2) is in the self-resonant state, obtaining a distance between the power transmitting coil (20) and the power receiving coil (30) according to the resonant frequency and adjusting a number of receiving-side driving modules (31, 32) to be enabled according to the distance by the receiving-side controller (4b).

9. The operating method according to claim 8, wherein the receiving-side controller (4b) presets a first frequency and a second frequency, the first frequency is the resonant frequency of the receiving-side resonant signal (RTa) when the power transmitting coil (20) and the power receiving coil (30) are at a minimum distance, the second frequency is the resonant frequency of the receiving-side resonant signal (RTa) when the power transmitting coil (20) and the power receiving coil (30) are at a preset maximum induction distance, and the operating method further comprises a step of calculating the distance between the power transmitting coil (20) and the power receiving coil (30) according to ratios of the resonant frequency of the receiving-side resonant signal (RTa) to the first and second frequencies by the receiving-side controller (4b).

10. The operating method according to claim 8, wherein the power receiving portion (3) further comprises an auxiliary rectifier (330) electrically connected to the power receiving coil (30) and the receiving-side controller (4b), and the operating method further comprises a step of rectifying power from the power receiving coil (30) to provide a DC power required for operation of the receiving-side controller (4b) by the auxiliary rectifier (330).

11. The operating method according to claim 10, wherein the power receiving portion (3) further comprises blocking switches (Pa, Pb), each of the blocking switches (Pa, Pb) is electrically connected between a corresponding receiving-side switch circuit (311) and the output terminal (1a) of the inductive power supply (1) and is controlled by the receiving-side controller (4b), and the operating method further comprises a step of turning off the blocking switches (Pa, Pb) by the receiving-side controller (4b) when an abnormal voltage occurs at the output terminal (1a) of the inductive power supply (1).

12. The operating method according to claim 11, wherein after the receiving-side controller (4b) receives the DC power provided by the auxiliary rectifier (330), an initial state of each of the receiving-side driving modules (31, 32) is disabled, and an initial state of each of the blocking switches (Pa, Pb) is off.

13. The operating method according to claim 8, wherein the step (S2) further comprises:
setting a time between two consecutive positive-to-negative or negative-to-positive voltage transitions of the receiving-side resonant signal (RTa) as a resonant cycle by the receiving-side controller (4b), and calculating a first time point at 1/4 of the resonant cycle and a second time point at 3/4 of the resonant cycle by the receiving-side controller (4b) when the resonant cycle falls within a preset resonant cycle range;
controlling a duty cycle of an upper switch (Q1A) and a lower switch (Q1B) of each of the receiving-side driving modules (31) according to output demand of the inductive power supply (1) by the receiving-side controller (4b); and
controlling one of the upper and lower switches (Q1A, Q1B) of each of the receiving-side driving modules (31) to turn on with a conduction time centered at the first time point, and controlling the other one of the upper and lower switches (Q1A, Q1B) of each of the receiving-side driving modules (31) to turn on with a conduction time centered at the second time point by the receiving-side controller (4b).

14. The operating method according to claim 8, wherein the number of the receiving-side driving modules (31, 32) is two and the receiving-side driving modules (31, 32) form a half-bridge configuration, or the number of the receiving-side driving modules (31, 32, 33, 34) is four and the receiving-side driving modules (31, 32, 33, 34) form a full-bridge configuration.
